# FASCICULE DE BREVET EUROPEEN

(11) **EP 1 975 534 B1**
(45) Date de publication et mention de la délivrance du brevet: **24.06.2020**
(21) Numéro de dépôt: 08103084.3
(22) Date de dépôt: 28.03.2008
(51) Int. Cl.: F28D 7/10, F28F 1/42

(54) **Installation de climatisation avec un échangeur de chaleur interne**
Klimaanlage mit einem internen Wärmetauscher
Air-conditioning installation with an internal heat exchanger

(30) Priorité: 29.03.2007 DE 102007015186
(43) Date de publication de la demande: 01.10.2008
(73) Titulaire: Valeo Klimasysteme GmbH, 96476 Bad Rodach (DE)
(72) Inventeur: Haussmann, Roland, 69168 WIESLOCH (DE)
(74) Mandataire: Tran, Chi-Hai

(56) Documents cités:
- EP-A1- 1 762 806
- EP-A2- 1 128 120
- EP-A2- 1 202 016
- WO-A1-92/20975
- WO-A1-97/44628
- DE-A1-102004 003 325
- FR-A- 362 995
- FR-A1- 2 545 594
- GB-A- 1 032 990
- JP-U- H01 144 677
- US-A- 4 657 074

## Description

L'invention concerne une installation de climatisation, pour un véhicule automobile, comprenant un compresseur, un condenseur, un réfrigérant qui n'est pas du CO₂, en particulier du R134 , un échangeur de chaleur externe apte à être traversé a par un fluide autre que le réfrigérant afin d'assurer un échange thermique entre ce fluide et le réfrigérant, et un échangeur de chaleur interne comprenant un tube extérieur et un tube intérieur disposé à l'intérieur du tube extérieur, qui est pourvu sur son côté extérieur et sur son côté intérieur de nervures thermoconductrices. Le document EP 1 202 016 A2 divulgue une installation de climatisation pour un véhicule automobile comprenant un compresseur, un condenseur, un réfrigérant, un échangeur de chaleur externe et un échangeur de chaleur interne.

Un échangeur de chaleur interne du type mentionné ci-dessus est connu d'après le document DE 10 2004 003 325 A1. Il sert à accroître le rendement de l'installation de climatisation dans laquelle il est utilisé, en transférant la chaleur du réfrigérant utilisé du côté haute pression au réfrigérant du côté basse pression.

Toutefois, cet échangeur de chaleur interne connu n'est pas satisfaisant du point de vue de la performance de transfert thermique. Ceci est à attribuer au fait qu'il a été développé spécifiquement pour une installation de climatisation utilisant du CO₂ comme réfrigérant. Du fait de la haute pression de fonctionnement avec ce réfrigérant, il faut utiliser des épaisseurs de paroi qui gênent une bonne conduction thermique. Des alternatives de solutions pour des échangeurs de chaleur internes d'installations de climatisation qui sont optimisées en termes de transfert thermique présentent d'autres inconvénients, par exemple des coûts de fabrication élevés et une sécurité de processus insuffisante dans le cas d'échangeurs de chaleur qui se composent de plusieurs tôles métalliques assemblées par brasage.

L'objet de l'invention consiste à fournir un échangeur de chaleur pouvant être fabriqué de manière économique et fiable, qui se caractérise par un très bon transfert thermique d'une voie d'écoulement à l'autre.

A cet effet, il est prévu, conformément à l'invention, dans un échangeur de chaleur du type mentionné en introduction, que les nervures thermoconductrices se terminent du côté intérieur du tube intérieur à une certaine distance de l'axe médian du tube intérieur. Cette configuration inclut les conditions préalables que le tube intérieur puisse être extrudé de manière optimale avec les nervures thermoconductrices. Du fait de l'espace libre dans la région de l'axe médian du tube intérieur, un outil d'extrusion utilisé pour la fabrication du tube intérieur peut présenter un noyau relativement stable. Ceci permet une fabrication très précise du tube intérieur avec de faibles épaisseurs de paroi, par exemple en alliage d'aluminium. Les épaisseurs de paroi du tube intérieur valent de préférence 0,3 à 0,8 mm, tandis que les nervures thermoconductrices présentent de préférence une épaisseur de 0,15 à 0,5 mm. On peut voir que le tube intérieur a dans l'ensemble des parois très minces. Ceci permet d'offrir au fluide s'écoulant à l'intérieur du tube intérieur une grande surface de transfert thermique de sorte que le rendement de transfert thermique est optimisé.

Il est prévu que le tube intérieur présente sur son côté intérieur un premier et un deuxième type de nervures thermoconductrices, les nervures thermoconductrices du premier type s'étendant plus loin vers l'axe médian du tube intérieur que les nervures thermoconductrices du deuxième type. Cette configuration est particulièrement avantageuse pour la fiabilité de la construction du tube intérieur. Si toutes les nervures thermoconductrices s'étendaient uniformément vers le milieu à l'intérieur du tube intérieur, la distance entre elles et le milieu serait très courte. Il serait alors très complexe de créer un outil d'extrusion stable avec lequel le tube intérieur pourrait être fabriqué. Comme certaines des nervures thermoconductrices se terminent à une plus grande distance de l'axe médian que les autres, en particulier que les nervures thermoconductrices du premier type sont alternées avec les nervures thermoconductrices du deuxième type, on obtient vers le milieu du tube des conditions de place beaucoup plus favorables.

De préférence, il est prévu que les nervures thermoconductrices soient disposées sur le côté extérieur du tube intérieur sur le même rayon que les nervures thermoconductrices sur le côté intérieur. Ceci conduit à des voies de transfert thermique courtes entre le côté intérieur et le côté extérieur du tube intérieur et donc à un bon rendement de transfert thermique.

Selon l'invention, on prévoit de chaque côté de l'échangeur de chaleur un bloc de raccordement qui est pourvu d'un raccord haute pression et d'un raccord basse pression, au moins l'un des raccords conduisant à une chambre d'amortissement, qui est réalisée dans le bloc de raccordement. De cette manière, le bloc de raccordement de toute façon nécessaire peut être utilisé pour amortir les impulsions dans le réfrigérant du côté aspiration, en adaptant le volume et la géométrie de la chambre d'amortissement de manière appropriée. Si la chambre d'amortissement d'un bloc de raccordement est différente de la chambre d'amortissement de l'autre bloc de raccordement en termes de géométrie et de volume, on peut amortir les impulsions de manière appropriée avec différentes fréquences.

L'invention concerne une installation de climatisation avec un compresseur, un condenseur, un échangeur de chaleur externe et un échangeur de chaleur interne, comme décrit ci-dessus. En ce qui concerne les avantages de cette installation de climatisation, notamment en rapport avec le rendement et le développement de bruits, on se référera aux avantages mentionnés ci-dessus.

L'invention va être décrite ci-dessous à l'aide d'une forme de réalisation qui est illustrée dans les dessins annexés, dans lesquels :
la figure 1 illustre schématiquement une installation de climatisation avec un échangeur de chaleur interne selon l'invention ;
la figure 2 illustre une coupe à travers l'échangeur de chaleur interne ; et
la figure 3 illustre, en vue en coupe, une extrémité de l'échangeur de chaleur interne.

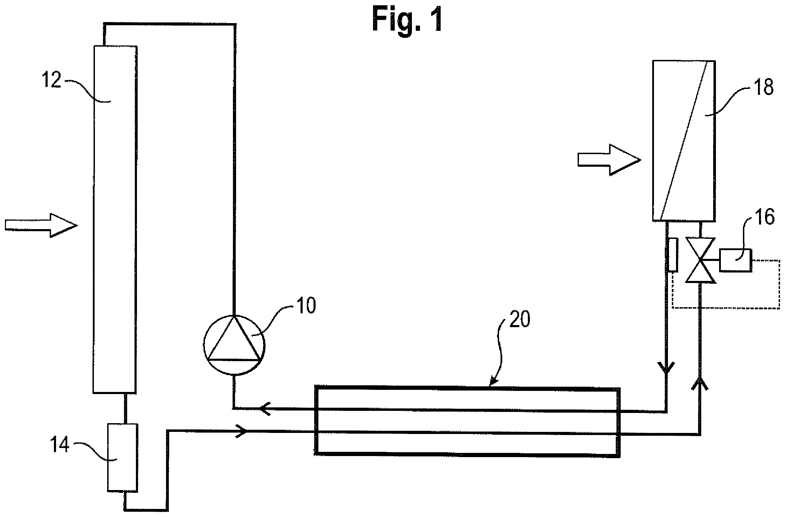

La figure 1 illustre schématiquement une installation de climatisation, pour un véhicule automobile, qui présente, en tant que composants essentiels, un compresseur à commande externe 10, un condenseur 12, un collecteur 14, un dispositif d'expansion 16 et un échangeur de chaleur externe 18. En plus, il est prévu un échangeur de chaleur interne 20, à travers lequel s'écoule le réfrigérant recirculé par le compresseur 10. En tant que réfrigérant, on utilise de préférence du R134a ou un réfrigérant similaire, mais pas du CO₂. L'échangeur de chaleur interne 20 est disposé de telle sorte qu'il soit parcouru dans un sens par le réfrigérant basse pression et dans l'autre sens par du réfrigérant haute pression.

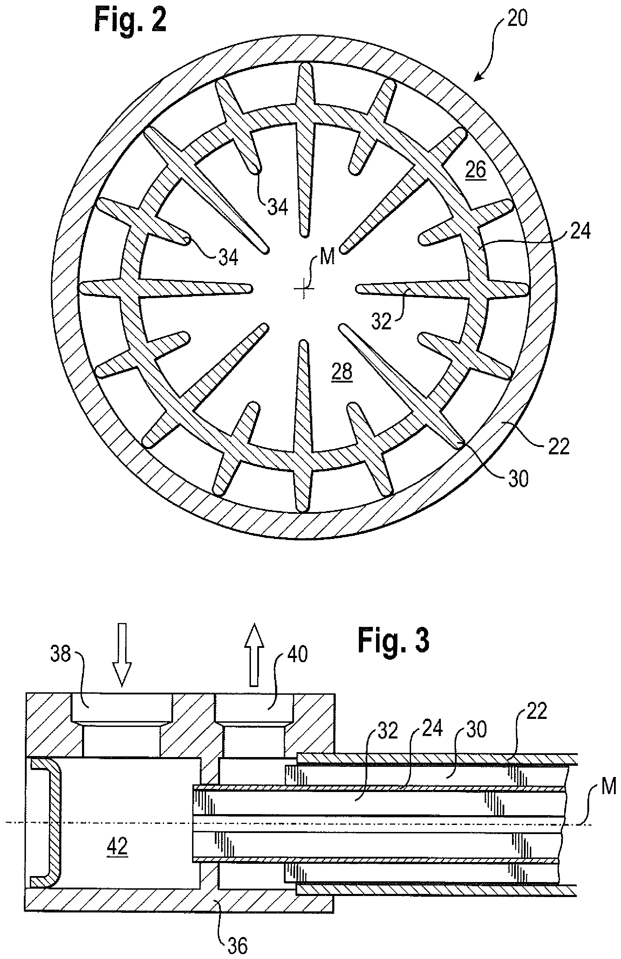

Les figures 2 et 3 illustrent l'échangeur de chaleur interne 20 en détail. Comme illustré dans la figure 2, l'échangeur de chaleur interne présente un tube extérieur 22, qui présente une surface intérieure et une surface extérieure lisses, et qui a une épaisseur de paroi de 0,5 à 2,0 mm. De préférence, l'épaisseur de paroi est de l'ordre de 0,8 à 1,2 mm. Le tube extérieur est de préférence embouti.

Un tube intérieur 24 est disposé coaxialement à l'intérieur du tube extérieur 22, de sorte qu'entre le tube extérieur 22 et le tube intérieur 24 soient délimitées une première voie d'écoulement 26, et à l'intérieur du tube intérieur 24, une deuxième voie d'écoulement 28. Le tube intérieur 24 est pourvu sur son côté extérieur dans l'ensemble de 16 nervures thermoconductrices 30, qui s'étendent dans la direction radiale depuis le tube intérieur 24 directement jusqu'à la surface intérieure du tube extérieur 22. De cette manière, le tube intérieur est maintenu mécaniquement dans le tube extérieur et peut résister à une pression d'éclatement avec des épaisseurs de paroi de dimensions plus faibles en conséquence.

Sur son côté intérieur, le tube intérieur 24 est également pourvu au total de 16 nervures thermoconductrices 32, 34, qui s'étendent également radialement et qui sont disposées à chaque fois sur le même rayon que les nervures thermoconductrices 30 sur le côté extérieur du tube intérieur 24. Les nervures thermoconductrices sur le côté intérieur du tube intérieur 24 sont réalisées différemment ; elles se composent de nervures thermoconductrices 32 d'un premier type et de nervures thermoconductrices 34 d'un deuxième type. Les nervures thermoconductrices 32 s'étendent en l'occurrence plus loin vers l'axe médian du tube intérieur 24 que les nervures thermoconductrices 34. Les nervures thermoconductrices 32, 34 sont en l'occurrence disposées en alternance. Le tube intérieur présente une épaisseur de paroi de l'ordre de 0,2 à 1,5 mm, notamment de l'ordre de 0,3 à 0,8 mm. Les nervures thermoconductrices 30, 32, 34 ont une épaisseur de l'ordre de 0,1 à 0,8 mm, notamment de l'ordre de 0,15 à 0,5 mm.

Le tube intérieur 24 avec les nervures thermoconductrices 30, 32, 34, est de préférence fabriqué par extrusion. Il est particulièrement avantageux dans ce cas que les nervures thermoconductrices 32 du premier type se terminent à distance de l'axe médian M du tube intérieur 24, de sorte qu'un outil d'extrusion puisse être utilisé avec un noyau central fixe. Ceci permet de fabriquer le tube intérieur 24 avec les nervures thermoconductrices avec une grande précision malgré les épaisseurs de paroi très minces.

La figure 3 illustre un bloc de raccordement 36, qui est disposé à une extrémité axiale de l'échangeur de chaleur constitué du tube extérieur 22 et du tube intérieur 24, et qui sert à le raccorder au circuit de réfrigérant. Le bloc de raccordement présente en l'occurrence un raccord basse pression 38, qui est en liaison avec la deuxième voie d'écoulement 28 à l'intérieur du tube intérieur 24, et un raccord haute pression 40, qui est en liaison avec la première voie d'écoulement 26 entre le tube extérieur 22 et le tube intérieur 24. Entre le raccord basse pression 38 et le tube intérieur 24 est réalisée une chambre d'amortissement 42 dans le bloc de raccordement 36, qui sert d'amortisseur du côté aspiration du compresseur, pour amortir les impulsions de pression du côté aspiration et les bruits associés. La chambre d'amortissement 42 est en l'occurrence adaptée en volume et en géométrie aux fréquences à amortir. Une chambre d'amortissement correspondante est également prévue dans le deuxième bloc de raccordement 36, non illustré ici. Le volume et la géométrie de la chambre d'amortissement ici prévue peuvent se distinguer de la géométrie et du volume de la chambre d'amortissement 42 dans le bloc de raccordement 36, afin de pouvoir amortir les impulsions de pression dans une autre région d'amortissement. De cette manière, on peut par exemple provoquer d'une part un amortissement ciblé dans la région de la fréquence propre de l'échangeur de chaleur externe et d'autre part un amortissement dans la région de la fréquence propre de l'échangeur de chaleur interne. La chambre entre le raccord haute pression 40 et l'entrée de la première voie d'écoulement 26 pourrait aussi être configurée en volume et en géométrie de telle sorte qu'elle serve de chambre d'amortissement.

L'échangeur de chaleur décrit a les avantages suivants : du fait des nervures thermoconductrices 30 disposées dans la première voie d'écoulement 26, et des nervures thermoconductrices 32, 34 disposées dans la deuxième voie d'écoulement 28, on peut réduire le diamètre hydraulique des deux voies d'écoulement du côté haute pression et du côté basse pression. Un faible diamètre hydraulique garantit un bon transfert thermique. En même temps, un grand diamètre d'écoulement peut être maintenu dans la deuxième voie d'écoulement 28, lequel assure une faible perte de pression du côté aspiration. Ceci est important car les pertes de pression du côté aspiration ont un effet particulièrement important sur le rendement total de l'installation de climatisation. La géométrie des nervures thermoconductrices 32 permet d'utiliser un outil d'extrusion avec un noyau interne rigide d'une seule pièce et donc très stable, de sorte que les nervures thermoconductrices peuvent être fabriquées avec une grande précision malgré une très faible épaisseur de paroi. Du fait de l'utilisation de nervures thermoconductrices du côté intérieur et du côté extérieur du tube intérieur, on obtient un échangeur de chaleur interne qui présente une grande surface de transfert thermique pour un faible volume et un faible poids. En l'occurrence, les nervures thermoconductrices peuvent être conçues simplement dans l'optique d'un transfert thermique, car elles ne contribuent pas à la stabilité mécanique. Afin que le tube intérieur 24 puisse être réalisé avec une épaisseur de paroi aussi faible que possible, il est prévu que la voie d'écoulement haute pression se trouve en dehors du tube intérieur. Finalement, il est très facilement possible, avec un espace de construction supplémentaire négligeable, grâce à la configuration appropriée des blocs de raccordement, d'intégrer des chambres d'amortissement.

## Revendications

1. Installation de climatisation pour un véhicule automobile comprenant un compresseur (10), un condenseur (12), un réfrigérant qui n'est pas du CO₂, en particulier du R134a, un échangeur de chaleur externe (18) apte à être traversé par un fluide autre que le réfrigérant afin d'assurer un échange thermique entre ce fluide et le réfrigérant, et un échangeur de chaleur interne (20) comprenant un tube extérieur (22) et un tube intérieur (24) disposé à l'intérieur du tube extérieur (22), de sorte qu'entre le tube extérieur (22) et le tube intérieur (24) soient délimitées une première voie d'écoulement (26), et à l'intérieur du tube intérieur (24), une deuxième voie d'écoulement (28), le tube intérieur (24) est pourvu sur son côté extérieur et sur son côté intérieur de nervures thermoconductrices (30, 32, 34), **caractérisée en ce que** les nervures thermoconductrices (32, 34) se terminent du côté intérieur du tube intérieur (24) à une certaine distance de l'axe médian (M) du tube intérieur (24), et **en ce que** de chaque côté de l'échangeur de chaleur (20) est prévu un bloc de raccordement (36) qui est pourvu d'un raccord haute pression (40) et d'un raccord basse pression (38), au moins l'un des raccords conduisant à une chambre d'amortissement (42) qui est réalisée dans le bloc de raccordement (36), et **en ce que** les nervures thermoconductrices (30) disposées sur le côté extérieur du tube intérieur (24) sont disposées dans la première voie d'écoulement (26) et les nervures thermoconductrices (32, 34) disposées sur le côté intérieur du tube intérieur (24) sont disposées dans la deuxième voie d'écoulement (28), et le tube intérieur (24) présente, sur son côté intérieur, un premier et un deuxième type de nervures thermoconductrices (32, 34), les nervures thermoconductrices (32) du premier type s'étendant plus loin vers l'axe médian (M) du tube intérieur (24) que les nervures thermoconductrices (34) du deuxième type, et une chambre d'amortissement (42) est réalisée dans le bloc de raccordement du côté de l'entrée de l'échangeur de chaleur interne (20) et dans celui du côté de la sortie de l'échangeur de chaleur interne (20), les deux chambres d'amortissement ayant des formes et/ou des volumes internes différents, de sorte que deux fréquences propres différentes puissent être amorties de manière optimale.

2. Installation de climatisation selon la revendication 1, **caractérisée en ce que** les nervures thermoconductrices (32) du premier type sont alternées avec les nervures thermoconductrices (34) du deuxième type.

3. Installation de climatisation selon l'une quelconque des revendications précédentes, **caractérisée en ce que** les nervures thermoconductrices (30) sur le côté extérieur du tube intérieur (24) sont disposées sur le même rayon que les nervures thermoconductrices (32, 34) sur le côté intérieur.

4. Installation de climatisation selon la revendication 3, **caractérisée en ce que** les nervures thermoconductrices (30) sur le côté extérieur du tube intérieur (24) sont identiques.

5. Installation de climatisation selon l'une quelconque des revendications précédentes, **caractérisée en ce que** le tube intérieur (24) présente une épaisseur de paroi de l'ordre de 0,2 à 1,5 mm, notamment de l'ordre de 0,3 à 0,8 mm.

6. Installation de climatisation selon l'une quelconque des revendications précédentes, **caractérisée en ce que** le tube extérieur (22) présente une épaisseur de paroi de l'ordre de 0,5 à 2,0 mm, notamment de l'ordre de 0,8 à 1,2 mm.

7. Installation de climatisation selon l'une quelconque des revendications précédentes, **caractérisée en ce que** les nervures thermoconductrices (30, 32, 34) présentent une épaisseur de l'ordre 0,1 à 0,8 mm, notamment de l'ordre de 0,15 à 0,5 mm.

8. Installation de climatisation selon l'une quelconque des revendications précédentes, **caractérisée en ce que** le tube intérieur (24) est extrudé avec les nervures thermoconductrices (30, 32, 34).

9. Installation de climatisation selon l'une quelconque des revendications précédentes, **caractérisée en ce que** le tube intérieur (24) se compose d'un alliage d'aluminium.

10. Installation de climatisation selon l'une quelconque des revendications précédentes, **caractérisée en ce qu'**une des chambres d'amortissement (42) est disposée du côté aspiration du compresseur (10), une autre chambre d'amortissement étant disposée entre le raccord haute pression (40) et l'entrée de la première voie d'écoulement (26).

## Patentansprüche

1. Klimaanlage für ein Kraftfahrzeug, umfassend einen Kompressor (10), einen Kondensator (12), ein Kältemittel, das nicht CO₂ ist, insbesondere R134a, einen externen Wärmetauscher (18), der geeignet ist, von einem anderen Fluid als dem Kältemittel durchströmt zu werden, um einen Wärmeaustausch zwischen diesem Fluid und dem Kältemittel zu gewährleisten, und einen internen Wärmetauscher (20), der ein Außenrohr (22) und ein Innenrohr (24), das im Innern des Außenrohrs (22) angeordnet ist, umfasst, so dass zwischen dem Außenrohr (22) und dem Innenrohr (24) ein erster Strömungskanal (26) und im Innern des Innenrohrs (24) ein zweiter Strömungskanal (28) begrenzt wird, wobei das Innenrohr (24) auf seiner Außenseite und auf seiner Innenseite mit wärmeleitenden Rippen (30, 32, 34) versehen ist, **dadurch gekennzeichnet, dass** die wärmeleitenden Rippen (32, 34) auf der Innenseite des Innenrohrs (24) in einem bestimmten Abstand von der Mittelachse (M) des Innenrohrs (24) enden und dass auf jeder Seite des Wärmetauschers (20) ein Anschlussblock (36) vorgesehen ist, der mit einem Hochdruckanschluss (40) und einem Niederdruckanschluss (38) versehen ist, wobei mindestens einer der Anschlüsse zu einer Dämpfungskammer (42) führt, die in dem Anschlussblock (36) ausgeführt ist, und dass die auf der Außenseite des Innenrohrs (24) angeordneten wärmeleitenden Rippen (30) in dem ersten Strömungskanal (26) angeordnet sind und die auf der Innenseite des Innenrohrs (24) angeordneten wärmeleitenden Rippen (32, 34) in dem zweiten Strömungskanal (28) angeordnet sind und das Innenrohr (24) auf seiner Innenseite einen ersten und einen zweiten Typ wärmeleitender Rippen (32, 34) aufweist, wobei sich die wärmeleitenden Rippen (32) des ersten Typs weiter zur Mittelachse (M) des Innenrohrs (24) hin erstrecken als die wärmeleitenden Rippen (34) des zweiten Typs, und eine Dämpfungskammer (42) in dem Anschlussblock auf der Seite des Einlasses des internen Wärmetauschers (20) und in dem auf der Seite des Auslasses des internen Wärmetauschers (20) ausgeführt ist, wobei die beiden Dämpfungskammern verschiedene Formen und/oder Innenvolumina haben, so dass zwei verschiedene Eigenfrequenzen optimal gedämpft werden können.

2. Klimaanlage nach Anspruch 1, **dadurch gekennzeichnet, dass** die wärmeleitenden Rippen (32) des ersten Typs mit den wärmeleitenden Rippen (34) des zweiten Typs abwechseln.

3. Klimaanlage nach einem der vorhergehenden Ansprüche, **dadurch gekennzeichnet, dass** die wärmeleitenden Rippen (30) auf der Außenseite des Innenrohrs (24) auf demselben Radius wie die wärmeleitenden Rippen (32, 34) auf der Innenseite angeordnet sind.

4. Klimaanlage nach Anspruch 3, **dadurch gekennzeichnet, dass** die wärmeleitenden Rippen (30) auf der Außenseite des Innerohrs (24) identisch sind.

5. Klimaanlage nach einem der vorhergehenden Ansprüche, **dadurch gekennzeichnet, dass** das Innenrohr (24) eine Wanddicke in der Größenordnung von 0,2 bis 1,5 mm, insbesondere in der Größenordnung von 0,3 bis 0,8 mm aufweist.

6. Klimaanlage nach einem der vorhergehenden Ansprüche, **dadurch gekennzeichnet, dass** das Außenrohr (22) eine Wanddicke in der Größenordnung von 0,5 bis 2,0 mm, insbesondere in der Größenordnung von 0,8 bis 1,2 mm aufweist.

7. Klimaanlage nach einem der vorhergehenden Ansprüche, **dadurch gekennzeichnet, dass** die wärmeleitenden Rippen (30, 32 34) eine Dicke in der Größenordnung 0,1 bis 0,8 mm, insbesondere in der Größenordnung von 0,15 bis 0,5 mm aufweisen.

8. Klimaanlage nach einem der vorhergehenden Ansprüche, **dadurch gekennzeichnet, dass** das Innenrohr (24) mit den wärmeleitenden Rippen (30, 32, 34) extrudiert ist.

9. Klimaanlage nach einem der vorhergehenden Ansprüche, **dadurch gekennzeichnet, dass** das Innenrohr (24) aus einer Aluminiumlegierung besteht.

10. Klimaanlage nach einem der vorhergehenden Ansprüche, **dadurch gekennzeichnet, dass** eine Dämpfungskammer (42) auf der Saugseite des Kompressors (10) angeordnet ist, wobei eine weitere Dämpfungskammer zwischen dem Hochdruckanschluss (40) und dem Einlass des ersten Strömungskanals (26) angeordnet ist.

## Claims

1. Air-conditioning installation for a motor vehicle, comprising a compressor (10), a condenser (12), a refrigerant which is not CO₂, in particular R134a, an external heat exchanger (18) through which a fluid other than the refrigerant can pass so as to provide an exchange of heat between this fluid and the refrigerant, and an internal heat exchanger (20) comprising an outer tube (22) and an inner tube (24) arranged inside the outer tube (22) so as to delimit a first flow path (26) between the outer tube (22) and the inner tube (24) and a second flow path (28) inside the inner tube (24), the inner tube (24) is provided on both its outer and inner sides with heat-conducting ribs (30, 32, 34), **characterized in that** the heat-conducting ribs (32, 34) end on the inner side of the inner tube (24) at a certain distance from the median axis (M) of the inner tube (24), and **in that** each side of the heat exchanger (20) is provided with a connection block (36) which is provided with a high-pressure port (40) and with a low-pressure port (38), at least one of the ports leading to a damping chamber (42) which is created in the connection block (36), and **in that** the heat-conducting ribs (30) arranged on the outer side of the inner tube (24) are arranged in the first flow path (26) and the heat-conducting ribs (32, 34) arranged on the inner side of the inner tube (24) are arranged in the second flow path (28), and the inner tube (24) has, on its inner side, a first and a second type of heat-conducting rib (32, 34), the heat-conducting ribs (32) of the first type extending further towards the median axis (M) of the inner tube (24) than the heat-conducting ribs (34) of the second type, and a damping chamber (42) is created in the connection block on the side of the inlet of the inner heat exchanger (20) and **in that** one on the side of the outlet of the inner heat exchanger (20), the two damping chambers having different internal shapes and/or volumes, thus making it possible to optimally damp two different natural frequencies.

2. Air-conditioning installation according to Claim 1, **characterized in that** the heat-conducting ribs (32) of the first type alternate with the heat-conducting ribs (34) of the second type.

3. Air-conditioning installation according to either one of the preceding claims, **characterized in that** the heat-conducting ribs (30) on the outer side of the inner tube (24) are arranged on the same radius as the heat-conducting ribs (32, 34) on the inner side.

4. Air-conditioning installation according to Claim 3, **characterized in that** the heat-conducting ribs (30) on the outer side of the inner tube (24) are identical.

5. Air-conditioning installation according to any one of the preceding claims, **characterized in that** the inner tube (24) has a wall thickness of the order of 0.2 to 1.5 mm, in particular of the order of 0.3 to 0.8 mm.

6. Air-conditioning installation according to any one of the preceding claims, **characterized in that** the outer tube (22) has a wall thickness of the order of 0.5 to 2.0 mm, in particular of the order of 0.8 to 1.2 mm.

7. Air-conditioning installation according to any one of the preceding claims, **characterized in that** the heat-conducting ribs (30, 32, 34) have a thickness of the order of 0.1 to 0.8 mm, in particular of the order of 0.15 to 0.5 mm.

8. Air-conditioning installation according to any one of the preceding claims, **characterized in that** the inner tube (24) is extruded with the heat-conducting ribs (30, 32, 34).

9. Air-conditioning installation according to any one of the preceding claims, **characterized in that** the inner tube (24) is made of an aluminium alloy.

10. Air-conditioning installation according to any one of the preceding claims, **characterized in that** one of the damping chambers (42) is arranged on the intake side of the compressor (10), another damping chamber being arranged between the high-pressure port (40) and the inlet of the first flow path (26).
